# EUROPÄISCHE PATENTSCHRIFT

(11) **EP 3 583 186 B1**
(45) Veröffentlichungstag und Bekanntmachung des Hinweises auf die Patenterteilung: **05.05.2021**
(21) Anmeldenummer: 18712427.6
(22) Anmeldetag: 16.02.2018
(51) Int. Cl.: C09K 5/16, F28D 20/00

(54) **VERFAHREN ZUR THERMOCHEMISCHEN WÄRMESPEICHERUNG**
METHOD FOR THERMOCHEMICAL HEAT STORAGE
PROCÉDÉ D'ACCUMULATION THERMOCHIMIQUE DE CHALEUR

(30) Priorität: 16.02.2017 AT 582017
(43) Veröffentlichungstag der Anmeldung: 25.12.2019
(73) Patentinhaber: Technische Universität Wien, 1040 Wien (AT); Akademie Der Bildenden Kuenste Wien, 1010 Wien (AT)
(72) Erfinder: MÜLLER, Danny, 1080 Wien (AT); KNOLL, Christian, 1100 Wien (AT); WEINBERGER, Peter, 3422 Altenberg (AT); WERNER, Andreas, 2000 Stockerau (AT); HARASEK, Michael, 1160 Wien (AT)
(74) Vertreter: Ellmeyer, Wolfgang
(86) Internationale Anmeldenummer: PCT/AT2018/060046
(87) Internationale Veröffentlichungsnummer: WO 2018/148775

(56) Entgegenhaltungen:
- WO-A1-2016/158973
- DE-A1-102014 101 987
- JP-A- S5 883 198
- SHKATULOV ALEXANDR ET AL: "Modification of magnesium and calcium hydroxides with salts: An efficient way to advanced materials for storage of middle-temperature heat", ENERGY, ELSEVIER, AMSTERDAM, NL, Bd. 85, 4. Mai 2015 (2015-05-04), Seiten 667-676, XP029171792, ISSN: 0360-5442, DOI: 10.1016/J.ENERGY.2015.04.004
- ALEXANDR SHKATULOV ET AL: "Doping Magnesium Hydroxide with Sodium Nitrate: A New Approach to Tune the Dehydration Reactivity of Heat-Storage Materials", ACS APPLIED MATERIALS & INTERFACES, Bd. 6, Nr. 22, 5. November 2014 (2014-11-05), Seiten 19966-19977, XP055479369, US ISSN: 1944-8244, DOI: 10.1021/am505418z

## Beschreibung

Die vorliegende Erfindung betrifft ein Verfahren zur thermochemischen Wärmespeicherung ("thermochemical energy storage", TCES) mittels Durchführung endothermer chemischer Reaktionen zur Speicherung von Wärmeenergie in Form von chemischer Energie unter Verwendung von Magnesiumoxid als Wärmespeichermedium.

### STAND DER TECHNIK

Die Verwendung von Magnesiumoxid, MgO, als thermochemisches Wärmespeichermedium oder als so genannte chemische Wärmepumpe ist seit Langem bekannt. So beschreiben etwa Kato et al. in "Thermal analysis of a magnesium oxide/water chemical heat pump for cogeneration", Appl. Therm. Eng. 21, 1067-1081 (2001), die Speicherung von Wärmeenergie in Form von chemischer Energie bzw. die abwechselnde Nutzung der frei werdenden Reaktionsenthalpien bei der Hydratation von Magnesiumoxid zu Magnesiumhydroxid bzw. Kondensation von Wasserdampf zu flüssigem Wasser gemäß den nachstehenden Gleichgewichtsreaktionen:

| | |
|---|---|
| (1) MgO₍ₛ₎ + H₂O_{(g)} ⇄ Mg(OH)₂ | ΔH⁰₁ = -81 kJ/mol |
| (2) H₂O_{(g)} ⇄ H₂O₍ₗ₎ | ΔH⁰₂ = -40 kJ/mol |

Soll beispielsweise Industrieabwärme zur Erzeugung von Warmwasser genutzt werden, kann ein Wärmeüberschuss, z.B. in Zeiten geringeren Warmwasserbedarfs, unter Nutzung des obigen Systems gespeichert werden, indem durch die Abwärme das Gleichgewicht der obigen Reaktionsgleichung (1) nach links verschoben wird und MgO und Wasserdampf gebildet werden, woraufhin der Wasserdampf kondensiert, ein Teil der eingebrachten Wärmemenge sofort wieder rückgewonnen und die Differenzenthalpie in Form von festem MgO gespeichert wird.

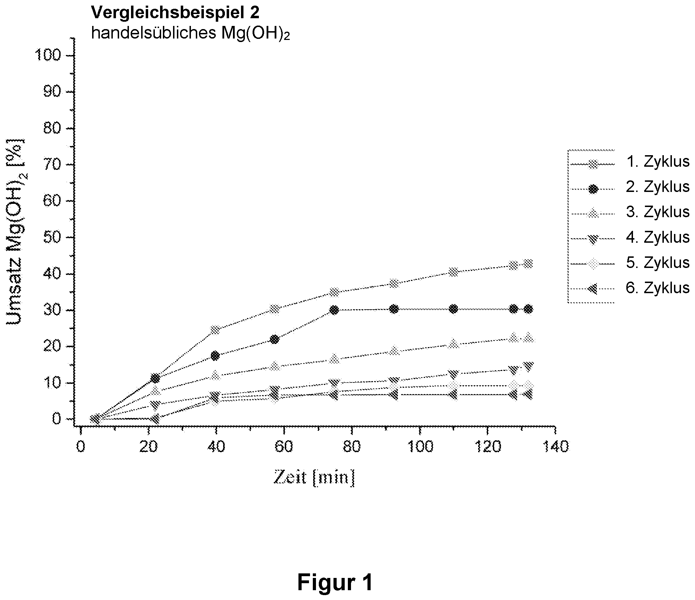

Nachteilig ist bei derartigen Verfahren jedoch die Tatsache, dass bei der Rehydratationsreaktion von MgO zu Mg(OH)₂ praktisch kein vollständiger Umsatz erzielbar ist. In manchen Fällen werden mitunter nur Umsätze im Bereich von 40-60 % erreicht, wie dies durch die späteren Vergleichsbeispiele belegt wird. Darüber hinaus nehmen die Umsätze mit zunehmender Anzahl der Zyklen von De- und Rehydratation drastisch ab, wie dies auch die vorliegenden Erfinder in ihren Experimenten bestätigen konnten (siehe Fig. 1, auf die später noch näher eingegangen wird), was auf Änderungen der Partikelmorphologie und der Kristallstruktur beim Übergang von einer chemischen Verbindung in die andere zurückgeführt wird.

Auch eine Immobilisierung des Magnesiumoxids auf festen Trägern wie etwa Zeolith, wie dies z.B. in WO 2011/098228 A2 offenbart wird, löst dieses Problem nur unzureichend und bringt die zusätzlichen Nachteile von erhöhtem Gewicht und Raumbedarf des Wärmespeichermediums mit sich.

Ziel der Erfindung war vor diesem Hintergrund die Entwicklung eines verbesserten Verfahrens zur thermochemischen Wärmespeicherung unter Verwendung von Magnesiumoxid als Speichermedium.

### OFFENBARUNG DER ERFINDUNG

Dieses Ziel löst die vorliegende Erfindung durch Bereitstellung eines Verfahrens zur thermochemischen Energiespeicherung durch Brennen von Hydroxiden von Erdalkalimetallen M zu den entsprechenden Oxiden unter Speicherung der Reaktionsenthalpie ΔH_{R} und späteren Wiederfreisetzung der Energie durch Rehydratation gemäß dem folgenden chemischen Gleichgewicht:

(3) M(OH)₂ + ΔH_{R} ⇄ MO + H₂O ,

mit dem Kennzeichen, dass als Erdakalimetallhydroxid ein mit Calcium dotiertes Magnesiumhydroxid in Form von Magnesiumcalciumhydroxid Mg₁₋ₓCaₓ(OH)₂ eingesetzt wird, das durch Brennen gemäß der folgenden Gleichgewichtsreaktion in ein mit Calciumhydroxid dotiertes Magnesiumoxid der Formel Mg₍₁₋ₓ₎Caₓ(OH)₂ₓO₁₋ₓ übergeführt wird:

(4) Mg₍₁₋ₓ₎Caₓ(OH)₂ + ΔH_{R} ⇄ Mg₍₁₋ₓ₎Caₓ(OH)₂ₓO₁₋ₓ + (1-x)H₂O ,

wobei der molare Calciumanteil x im Bereich 0,01 < x ≤ 0,3 liegt.

Die Erfinder haben nämlich überraschenderweise herausgefunden, dass die Verwendung von Magnesiumcalciumhydroxid Mg₁₋ₓCaₓ(OH)₂ mit einem Calcium-Anteil größer 1 Mol-% und nicht mehr als 30 Mol-% anstelle von calciumfreiem Magnesiumhydroxid als Wärmespeichermedium sowohl eine erhebliche Verbesserung des Umsatzes der Rehydratationsreaktion als auch ein deutlich geringerer Umsatzrückgang aufgrund wiederholter Reaktionszyklen aus De- und Rehydratation erzielt werden können.

Ohne sich auf eine bestimmte Theorie festlegen zu wollen, nehmen die Erfinder an, dass die Gegenwart der voluminöseren Calciumionen an einzelnen Magnesiumionen-Positionen in den kubischen MgO-Kristalliten aus Mg²⁺- und O²⁻-Ionen zu einer Verzerrung des Kristallgitters und einem daraus folgenden besseren Zutritt von Hydroxidionen zu den Mg²⁺-Ionen während der Rehydratation sowie zu einer Begünstigung sowohl der Absorption von H₂O-Molekülen als auch der Dissoziation des Wassers in H⁺- und OH⁻-Ionen führt. Zum Vergleich: Der lonenradius von Mg²⁺-Ionen beträgt 0,65 Å, jener von Ca²⁺-Ionen 0,97 Å, d.h. ziemlich genau um die Hälfte mehr. Dies wurde auch durch quantenchemische Berechnungen bestätigt, bei denen eine allmähliche Vergrößerung des Durchmessers von Magnesiumionen im MgO-Kristall simuliert wurde.

Damit dieser Effekt messbar zutage tritt, ist gemäß den in den späteren Ausführungsbeispielen offenbarten Ergebnissen der Erfinder allerdings ein Ca-Anteil von mehr als 1 Mol-% erforderlich. Der Umstand, dass der Calciumanteil während der Dehydratation nicht gebrannt wird, sondern als Calciumhydroxid erhalten bleibt, wodurch die dotierten Ca²⁺-Ionen in den MgO-Kristalliten mit OH⁻-Ionen koordiniert bleiben, verstärkt den Effekt durch elektronische Einflüsse noch zusätzlich. Der Grund, warum die Wirkung der vorliegenden Erfindung bei einem Ca-Anteil von 30 Mol-% kaum noch und bei 40 Mol-% gar nicht mehr beobachtet werden konnte, dürfte hingegen darin liegen, dass es bei Calciumanteilen von rund 30 Mol-% allmählich zu einer partiellen Entmischung von Ca(OH)₂ unter Ausbildung einer zweiten festen Phase kommt, so dass gemischte Magnesiumcalciumhydroxide mit einem Ca-Anteil x von 0,4 oder mehr offenbar gar nicht herstellbar sind.

Um Missverständnissen vorzubeugen, sei erneut ausdrücklich darauf hingewiesen, dass es sich bei den gemäß vorliegender Erfindung verwendeten Magnesiumcalciumhydroxiden nicht um physikalische Gemische aus Mg(OH)₂ und Ca(OH)₂, sondern um Verbindungen der Formel Mg₁₋ₓCaₓ(OH)₂ handelt. Mit physkalischen Gemischen wäre es völlig unmöglich, die oben beschriebenen Effekte herbeizuführen, was durch die mit 30 und 40 Mol-% Calcium erzielten Ergebnisse bestätigt wird.

In bevorzugten Ausführungsformen liegt der molare Calciumanteil x im Magnesiumcalciumhydroxid Mg₁₋ₓCaₓ(OH)₂ daher im Bereich 0,05 ≤ x ≤ 0,2, noch bevorzugter im Bereich 0,075 ≤ x ≤ 0,175, was bedeutet, dass das Ausmaß der Calciumdotierung vorzugsweise im Bereich von 5 bis 20 Mol-%, noch bevorzugter im Bereich von 7,5 bis 17,5 Mol-%, liegt. Besonders bevorzugt liegt der Calciumanteil bei etwa 10 Mol-%, da hier die besten Resultate erzielt wurden, wie dies die späteren Ausführungsbeispiele klar belegen.

Das Brennen des Magnesiumcalciumhydroxids erfolgt gemäß vorliegender Erfindung vorzugsweise bei einer Temperatur T < 450 °C, da bei höheren Temperaturen auch das Calciumhydroxid dehydratisiert werden würde und es außerdem bereits zu merklicher Sinterung des Magnesiumoxids kommen kann, was die spezifische Oberfläche des Magnesiumoxids deutlich reduzieren und dadurch die Rehydratation deutlich erschweren oder gar unmöglich machen würde. Noch bevorzugter wird bei einer Temperatur T im Bereich von 350 °C bis 400 °C gebrannt, da die Dehydratation bei Temperaturen unter 350 °C unwirtschaftlich langsam abläuft. Insbesondere beträgt die Brenntemperatur T etwa 375 °C, was einerseits einen Kompromiss zwischen ausreichend rascher Dehydratationsreaktion und dem Energieaufwand darstellt und andererseits ein Sintern des Magnesiumoxids, das mitunter schon bei etwa 400 °C beginnt, gänzlich verhindert.

Fall das Magnesiumcalciumhydroxid zum Brennen nicht in einen bereits auf die gewünschte Brenntemperatur T vorgeheizten Ofen eingebracht wird, wie dies gemäß vorliegender Erfindung bevorzugt wird, sondern von Umgebungstempratur auf eine bevorzugte Temperatur T unter 400 °C erhitzt wird, sollte weiters die Heizrate 5 K/min nicht übersteigen, um (z.B. lokale) Überhitzung des Salzes zu vermeiden.

Das Brennen bei den genannten Temperaturen wird gemäß vorliegender Erfindung vorzugsweise für eine Zeitspanne von mehreren Stunden, noch bevorzugter zumindest 2 h lang, besonders bevorzugt etwa 4 h lang, durchgeführt, um möglichst vollständigen Umsatz zu ermöglichen.

Die Rehydratation des mit Calciumhydroxid dotierten Magnesiumoxids der Formel Mg₍₁₋ₓ₎Caₓ(OH)₂ₓO₁₋ₓ kann zwar auch mit flüssigem Wasser erfolgen, dies ist gemäß vorliegender Erfindung allerdings nicht bevorzugt, da es dabei zu einem Verschließen der Poren an der Oberfläche des Wärmespeichermaterials kommt, wodurch der Umsatz pro Zeiteinheit drastisch abnimmt. Vorzugsweise wird die Rehydratation daher durch Reaktion mit Wasserdampf-gesättigter Luft oder mit Wasserdampf, alleine oder in Kombination mit einem Trägergas, besonders bevorzugt mit im Wesentlichen reinem Wasserdampf, durchgeführt, da (möglichst) hohe Anteile an Wasserdampf im Reaktionsgas die Reaktionsgeschwindigkeit erhöhen. Unter im Wesentlichen reinem Wasserdampf ist hierin Wasserdampf zu verstehen, der einen geringen Anteil von nicht mehr als 5 Vol.-% an Fremdgasen enthalten kann, z.B. eines oder mehrerer Trägergase wie etwa Stickstoff, Helium oder anderer Edelgase. Trägergase werden mitunter zur besseren Durchströmbarkeit von Leitungen oder Reaktoren zugesetzt. Vorzugsweise beträgt der Anteil an Fremdgasen in dem im Wesentlichen reinen Wasserdampf gemäß vorliegender Erfindung nicht mehr als 3 Vol.-%, insbesondere nicht mehr als 1 Vol.-%.

### KURZBESCHREIBUNG DER ZEICHNUNGEN

Nachstehend wird die vorliegende Erfindung anhand von nichteinschränkenden Beispielen und unter Bezugnahme auf die beiliegenden Zeichnungen näher beschrieben, die Folgendes darstellen:
Fig. 1 zeigt die Umsätze von handelsüblichem Mg(OH)₂ in mehreren Zyklen von De- und Rehydratation.
Fig. 2 zeigt die Umsätze von mit variierenden Mengen an Ca dotierten Magnesiumhydroxiden der Formel Mg₁₋ₓCaₓ(OH)₂ nach einem Zyklus von De- und Rehydratation.
Fig. 3 zeigt die Umsätze zweier Ca-dotierter Magnesiumhydroxide gemäß vorliegender Erfindung in mehreren Zyklen von De- und Rehydratation.

### BEISPIELE

In Verlauf ihrer Experimente haben die Erfinder Calcium-dotierte Magnesiumhydroxide hergestellt und deren Verhalten während eines oder mehrerer Zyklen von De- und Rehydratation gemäß Gleichung (4)

(4) Mg₁₋ₓCaₓ(OH)₂ + ΔH_{R} ⇄ Mg₍₁₋ₓ₎Caₓ(OH)₂ₓO₁₋ₓ + (1-x)H₂O

mit jenem von einerseits ebenfalls frisch bereitetem und andererseits handelsüblichem undotiertem Magnesiumhydroxid in Zyklen gemäß Gleichung (5) verglichen:

(5) Mg(OH)₂ + ΔH_{R} ⇄ MgO + H₂O

Das handelsübliche Magnesiumhydroxid wurde dabei von Sigma Aldrich bezogen und unverändert eingesetzt.

### Synthesebeispiel 1

### Herstellung von Magnesiumhydroxid Mg(OH)₂

Zu einer gesättigten Lösung von Magnesiumchloridhydrat MgCl₂·6H₂O in CO₂-freiem destilliertem Wasser wurde unter Rühren ein stöchiometrisches Äquivalent an NaOH zugesetzt. Der sich spontan bildende, aus Mg(OH)₂ bestehende Niederschlag wurde abfiltriert, mit destilliertem Wasser nachgewaschen und bei 60 °C bis zur Gewichtskonstanz getrocknet.

### Synthesebeispiel 2

### Herstellung Magnesiumcalciumhydroxiden der Formel Mg₁₋ₓCaₓ(OH)₂

Calcium-dotierte Magnesiumhydroxide der Formel Mg₁₋ₓCaₓ(OH)₂ wurden durch Fällung aus gemischten Lösungen von Magnesiumchlorid und entsprechenden molaren Mengen an Calciumchlorid, die Werten für x zwischen 0,01 und 0,40 entsprachen, in CO₂-freiem destilliertem Wasser durch Zusatz von NaOH analog zum obigen Synthesebeispiel 1 hergestellt und getrocknet. Auf diese Weise wurden zwölf verschiedene Magnesiumcalciumhydroxide mit einem Calciumanteil von 1 %, 2,5 %, 5 %, 6,25 %, 7,5 %, 10 %, 12,5 %, 15 %, 17,5 %, 20 %, 30 % bzw. 40 %, jeweils in Mol-%, erhalten.

### Vergleichsbeispiele 1 bis 3 - Zyklen mit undotiertem Mg(OH)₂

Zur Bestimmung der Reaktivität wurde das jeweilige Magnesiumhydroxid gebrannt und rehydratisiert, wobei die Umsätze in situ mittels Röntgendiffraktometrie verfolgt und aufgezeichnet wurden. Zu diesem Zweck wurden die De- und Rehydratationsreaktionen in einer XRD-Reaktionskammer mit computergesteuerter Heizung einem oder mehreren Zyklen von De- und Rehydratation unterzogen. Da frühere Untersuchungen der Erfinder (siehe Müller et al., "In-situ rehydration of MgO obtained by low temperature calcination", ChemSusChem 2017; Artikel in Vorbereitung) bei Temperaturen zwischen 350 °C und 450 °C ergeben hatten, dass einerseits bei 350 °C über mehrere Stunden kaum Umsatz zu beobachten ist, während es über 400 °C und speziell bei 450 °C bereits zur Sinterung des Magnesiumoxids kommt, und dass andererseits die Dehydratation bei geeigneter Reaktionsführung bereits bei 375 °C abgeschlossen werden kann, erfolgte das Brennen zum Oxid hierin jeweils bei einer Temperatur von 375 °C über einen Zeitraum von 4 Stunden.

Die Rehydratation erfolgte aufgrund früherer Beobachtungen, wonach die Reaktion mit flüssigem Wasser die Poren an der Oberfläche des Magnesiumoxids verschließt, mit Wasserdampf.

### Vergleichsbeispiel 1

Zu diesem Zweck wurden zunächst Versuche mit kommerziellem Mg(OH)₂ durchgeführt, das zunächst bei 375 °C gebrannt und anschließend bei einer Probentemperatur von 50 °C mit feuchter Luft oder feuchtem Helium als Trägergas in Kontakt gebracht wurde. Dazu wurde das Trägergas mittels eines Befeuchters jeweils auf über 80 % relative Feuchte mit Wasserdampf gesättigt. Allerdings waren in beiden Fällen auch nach 3 Stunden nur geringfügige Umsätze zum Hydroxid zu beobachten.

### Vergleichsbeispiel 2

In der Folge wurde in einem Dampfgenerator Wasserdampf erzeugt und mit einem geringeren Anteil an Helium als Trägergas, das zur besseren Durchströmbarkeit der Testapparatur diente, in einem Verhältnis von 1,24 I/min Dampf mit 0,4 I/min Helium vermischt und in die Reaktionskammer eingeleitet und mit dem analog zu Vergleichsbeispiel 1 gebrannten kommerziellen Mg(OH)₂ erneut bei einer Probentemperatur von 50 °C umgesetzt. Dieser Zyklus von De- und Rehydratation wurde mehrere Male wiederholt. Fig. 1 zeigt die mittels XRD aufgezeichneten Umsätze der Rehydratationsreaktionen jedes von insgesamt 6 Zyklen während einer Reaktionszeit von 130 min.

Aus der Grafik ist ersichtlich, dass der Umsatz der Rehydratation im ersten Zyklus nur etwa 40 % betrug und bei neuerlicher De- und Rehydratation noch weiter abnahm. Im sechsten Zyklus wurden schließlich nur noch rund 5 % Umsatz erzielt.

### Vergleichsbeispiel 3

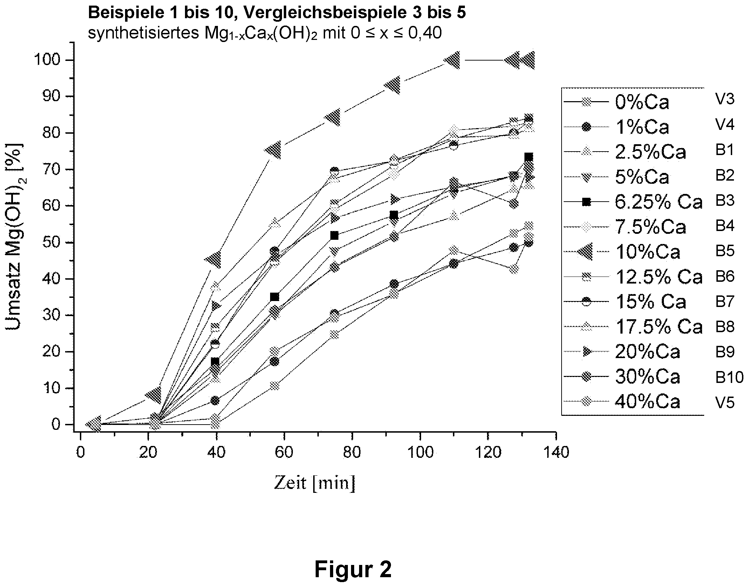

Analog zu Vergleichsbeispiel 2 wurde anstelle von kommerziellem Magnesiumhydroxid das in Synthesebeispiel 1 hergestellte Mg(OH)₂ einem Zyklus von De- und Rehydratation unterzogen, wobei ein Umsatz von etwa 55 % festgestellt wurde. Dieses Ergebnis ist als Plot für "0%Ca" in Fig. 2 dargestellt.

### Beispiele 1 bis 10, Vergleichsbeispiele 4 und 5 - Zyklen mit Mg₁₋ₓCaₓ(OH)₂

Analog zu Vergleichsbeispiel 3 wurden die zwölf in Synthesebeispiel 2 hergestellten Ca-dotierten Magnesiumhydroxide der Formel Mg₁₋ₓCaₓ(OH)₂ einem Zyklus von De- und Rehydratation unterzogen, deren Ergebnisse genau wie jenes von Vergleichsbeispiel 3 in Fig. 2 dargestellt sind.

Aus Fig. 2 ist klar ersichtlich, dass gegenüber dem in Vergleichsbeispiel 3 mit 0 Mol-% Calcium erzielten Umsatz von etwa 55 % jener von Vergleichsbeispiel 4 mit 1 Mol-% Ca-Dotierung sogar noch etwas niedriger lag, nämlich bei rund 50 %. Erst bei einem Ca-Anteil von 2,5 Mol-% (Beispiel 1) war eine Verbesserung, nämlich auf etwa 65 % zu beobachten. In der Folge stiegen die Umsätze mit zunehmender Calciumdotierung stetig an, nämlich bei 5 Mol-% Calcium auf etwa 70 % (Beispiel 2), bei 6,25 Mol-% auf knapp unter 75 % (Beispiel 3), bei 7,5 Mol-% auf knapp unter 85 % (Beispiel 4) und bei 10 Mol-% sogar auf nahezu 100 % (Beispiel 5). Bei noch höheren Anteilen an Calcium gingen die Umsätze allerdings wieder zurück, nämlich auf stetig abnehmende Werte zwischen 85 % und 80 % bei 12,5, 15 bzw. 17 Mol-% Calcium (Beispiele 6, 7 und 8), was etwa dem Umsatz bei 7,5 Mol-% in Beispiel 4 entspach, und danach auf rund 70 % sowohl bei 20 Mol-% (Beispiel 9) als auch bei 30 Mol-% Calcium (Beispiel 10), was etwa dem Umsatz bei 5 Mol-% in Beispiel 2 entsprach, und schließlich sogar auf nur rund 50 % bei 40 Mol-% Calcium (Vergleichsbeispiel 5). Letzteres ist der zuvor beschriebenen partiellen Entmischung von Ca(OH)₂-Kristalliten bei Ca-Anteilen ab etwa 30 Mol-% zuzuschreiben. Die Umsatzverbesserungen der erfindungsgemäßen Beispiele mit Ca-Anteilen im Bereich von 2,5 bis 30 Mol-% sind nichtsdestotrotz signifikant, wobei der nahezu quantitative Umsatz bei 10 Mol-% Calcium besonders überraschend war.

### Beispiele 11 und 12 - wiederholte Zyklen Mg₁₋ₓCaₓ(OH)₂

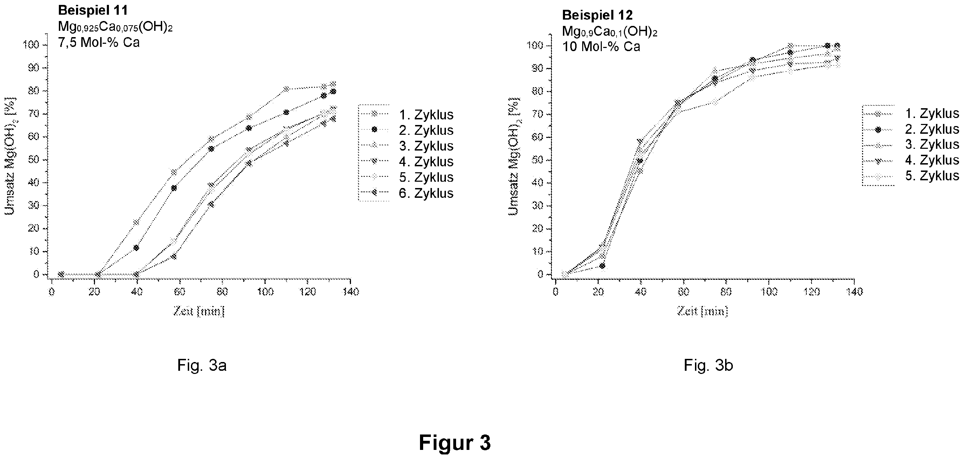

Aufgrund der obigen Ergebnisse wurden weitere Experimente mit den Salzen aus den Beispielen 4 und 5 durchgeführt, die sehr gut abgeschnitten hatten. Folglich wurden gemischte Hydroxide mit 7,5 bzw. 10 Mol-% Calciumanteil jeweils mehreren Zyklen von De- und Rehydratation unterzogen und die dabei erzielten Umsätze aufgezeichnet. Die Resultate sind in Fig. 3 dargestellt.

Im jeweils ersten Zyklus wurden die in den beiden früheren Beispielen erzielten Ergebnisse im Wesentlichen bestätigt, da das Magnesiumcalciumhydroxid mit 7,5 Mol-% Ca-Anteil erneut einen Umsatz von über 80 % (Beispiel 11) und jenes mit 10 Mol-% Calcium erneut nahezu 100%igen Umsatz (Beispiel 12) ergab.

Daneben tritt in Fig. 3 allerding auch deutlich zutage, dass die Verschlechterung des Umsatzes bei zunehmender Zyklenanzahl signifikant geringer ausfiel, als dies mit handelsüblichem undotiertem Magnesiumhydroxid festgestellt wurde. Während Letzteres im 6. Zyklus um rund 35 Prozentpunkte weniger Umsatz als im ersten Zyklus (5 % statt 40 %) lieferte, betrug die Umsatzabnahme in Beispiel 11 nur etwa 15 Prozentpunkte und in Beispiel 12 sogar nur 10 Prozentpunkte (wenngleich in diesem Fall nur 5 Zyklen gemessen wurden).

Somit belegen die obigen Beispiele für die vorliegende Erfindung die deutliche Überlegenheit der erfindungsgemäßen Verwendung von Calcium-dotierten Magnesiumhydroxid als Wärmespeichermedium gegenüber dem Stand der Technik.

## Patentansprüche

1. Verfahren zur thermochemischen Energiespeicherung durch Brennen von Hydroxiden von Erdalkalimetallen M zu den entsprechenden Oxiden unter Speicherung der Reaktionsenthalpie ΔH_{R} und späteren Wiederfreisetzung der Energie durch Rehydratation gemäß dem folgenden chemischen Gleichgewicht:
(3) M(OH)₂ + ΔH_{R} ⇄ MO + H₂O ,
**dadurch gekennzeichnet, dass** als Erdakalimetallhydroxid ein mit Calcium dotiertes Magnesiumhydroxid in Form von Magnesiumcalciumhydroxid Mg₁₋ₓCaₓ(OH)₂ eingesetzt wird, das durch Brennen gemäß der folgenden Gleichgewichtsreaktion in ein mit Calciumhydroxid dotiertes Magnesiumoxid der Formel Mg(₁₋ₓ)Caₓ(OH)₂ₓO₁₋ₓ übergeführt wird:
(4) Mg₍₁₋ₓ₎Caₓ(OH)₂ + ΔH_{R} ⇄ Mg₍₁₋ₓ₎Caₓ(OH)₂ₓO₁₋ₓ + (1-x)H₂O ,
wobei der molare Calciumanteil x im Bereich 0,01 < x ≤ 0,3 liegt.

2. Verfahren nach Anspruch 1, **dadurch gekennzeichnet, dass** der molare Calcium-anteil x im Magnesiumcalciumhydroxid Mg₁₋ₓCaₓ(OH)₂ im Bereich 0,05 ≤ x ≤ 0,2 liegt.

3. Verfahren nach Anspruch 2, **dadurch gekennzeichnet, dass** der molare Calcium-anteil x im Magnesiumcalciumhydroxid Mg₁₋ₓCaₓ(OH)₂ im Bereich 0,075 ≤ x ≤ 0,175 liegt.

4. Verfahren nach Anspruch 3, **dadurch gekennzeichnet, dass** der molare Calcium-anteil x im Magnesiumcalciumhydroxid Mg₁₋ₓCaₓ(OH)₂ etwa 0,1 beträgt.

5. Verfahren nach einem der vorangegangenen Ansprüche, **dadurch gekennzeichnet, dass** Brennen des Magnesiumcalciumhydroxids bei einer Temperatur T < 450 °C erfolgt.

6. Verfahren nach Anspruch 5, **dadurch gekennzeichnet, dass** bei einer Temperatur T im Bereich von 350 °C bis 400 °C gebrannt wird.

7. Verfahren nach Anspruch 6, **dadurch gekennzeichnet, dass** bei einer Temperatur T von etwa 375 °C gebrannt wird.

8. Verfahren nach einem der vorangegangenen Ansprüche, **dadurch gekennzeichnet, dass** das Brennen für eine Zeitspanne von etwa 4 h durchgeführt wird.

9. Verfahren nach einem der vorangegangenen Ansprüche, **dadurch gekennzeichnet, dass** die Rehydratation des mit Calciumhydroxid dotierten Magnesiumoxids der Formel Mg₍₁₋ₓ₎Caₓ(OH)₂ₓO₁₋ₓ durch Reaktion mit Wasserdampf-gesättigter Luft oder mit im Wesentlichen reinem Wasserdampf durchgeführt wird.

## Claims

1. A process for thermochemical energy storage by burning hydroxides of alkaline earth metals M into the corresponding oxides while storing the reaction enthalpy ΔH_{R} and releasing the energy by means of re-hydration at a later point in time, according to the chemical equilibrium below:
(3) M(OH)₂ + ΔH_{R} ⇄ MO + H₂O ,
**characterized in that** a calcium-doped magnesium hydroxide in the form of a magnesium calcium hydroxide Mg₁₋ₓCaₓ(OH)₂ is used as said alkaline earth metal hydroxide that is converted into a calcium-hydroxide-doped magnesium oxide of the formula Mg₍₁₋ₓ₎Caₓ(OH)₂ₓO₁₋ₓ by burning according to the equilibrium reaction below:
(4) **Mg₍₁₋ₓ₎Caₓ(OH)₂ + ΔH_{R} ⇄ Mg₍₁₋ₓ₎Caₓ(OH)₂ₓO₁₋ₓ + (1-x)H₂O** ,
wherein the molar fraction of calcium, x, is in the range of 0.01 < x ≤ 0.3.

2. The process according to claim 1, **characterized in that** the molar fraction of calcium, x, in said magnesium calcium hydroxide Mg₁₋ₓCaₓ(OH)₂ is in the range of 0.05 ≤ x ≤ 0.2.

3. The process according to claim 2, **characterized in that** the molar fraction of calcium, x, in said magnesium calcium hydroxide Mg₁₋ₓCaₓ(OH)₂ is in the range of 0.075 ≤ x ≤ 0.175.

4. The process according to claim 3, **characterized in that** the molar fraction of calcium, x, in said magnesium calcium hydroxide Mg₁₋ₓCaₓ(OH)₂ is approximately 0.1.

5. The process according to any one of the preceding claims, **characterized in that** said burning of the magnesium calcium hydroxide is performed at a temperature T < 450 °C.

6. The process according to claim 5, **characterized in that** said burning is performed at a temperature T ranging from 350 °C to 400 °C.

7. The process according to claim 6, **characterized in that** said burning is performed at a temperature T of approximately 375 °C.

8. The process according to any one of the preceding claims, **characterized in that** said burning is performed over a period of time of approximately 4 hours.

9. The process according to any one of the preceding claims, **characterized in that** said re-hydration of the calcium-hydroxide-doped magnesium oxide of the formula Mg₍₁₋ₓ)Caₓ(OH)₂ₓO₁₋ₓ is carried out by reacting it with air that is saturated with water vapor or with substantially pure water vapor.

## Revendications

1. Procédé de stockage thermochimique de l'énergie en calcinant des hydroxydes de métaux alcalino-terreux M pour obtenir les oxydes correspondants tout en stockant l'enthalpie de la réaction ΔH_{R} et en libérant l'énergie par réhydratation à un moment ultérieur selon l'équilibre chimique ci-dessous :
(3) **M(OH)₂ + ΔH_{R} ⇄ MO + H₂O** , **caractérisé en ce qu'**un hydroxyde de magnésium dopé au calcium sous la forme d'un hydroxyde de calcium et de magnésium Mg₁₋ₓCaₓ(OH)₂ est utilisé comme ledit hydroxyde de métal alcalino-terreux qui est converti en un oxyde de magnésium dopé à l'hydroxyde de calcium de la formule Mg₍₁₋ₓ₎Caₓ(OH)₂ₓO₁₋ₓ par une calcination selon la réaction d'équilibre ci-dessous :
(4) **Mg₍₁₋ₓ₎Caₓ(OH)₂ + ΔHR ⇄ Mg₍₁₋ₓ₎Caₓ(OH)₂ₓO₁₋ₓ + (1-x)H₂O** , où la fraction molaire de calcium x est dans la plage de 0,01 < x ≤ 0,3.

2. Procédé selon la revendication 1, **caractérisé en ce que** la fraction molaire du calcium x dans ledit hydroxyde de calcium et de magnésium Mg₁₋ₓCaₓ(OH)₂ est dans la plage de 0,05 ≤ x ≤ 0,2.

3. Procédé selon la revendication 2, **caractérisé en ce que** la fraction molaire de calcium x dans ledit hydroxyde de calcium et de magnésium Mg₁₋ₓCaₓ(OH)₂ est dans la plage de 0,075 ≤ x ≤ 0,175.

4. Procédé selon la revendication 3, **caractérisé en ce que** la fraction molaire de calcium x dans ledit hydroxyde de calcium et de magnésium Mg₁₋ₓCaₓ(OH)₂ est d'environ 0,1.

5. Procédé selon l'une quelconque des revendications précédentes, **caractérisé en ce que** ledit hydroxyde de calcium et de magnésium est calciné à une température T de < 450 °C.

6. Procédé selon la revendication 5, **caractérisé en ce que** la calcination est effectuée à une température T dans la plage de 350 °C et 400 °C.

7. Procédé selon la revendication 6, **caractérisé en ce que** la calcination est effectuée à une température T d'environ 375 °C.

8. Procédé selon l'une quelconque des revendications précédentes, **caractérisé en ce que** la calcination est effectuée pendant environ 4 heures.

9. Procédé selon l'une quelconque des revendications précédentes, **caractérisé en ce que** l'oxyde de magnésium dopé à l'hydroxyde de calcium de la formule Mg₍₁₋ₓ₎Caₓ(OH)₂ₓO₁₋ₓ est réhydraté en le faisant réagir avec de l'air saturé de vapeur d'eau ou avec de la vapeur d'eau essentiellement pure.
